# FASCICULE DE BREVET EUROPEEN

(11) **EP 2 720 004 B1**
(45) Date de publication et mention de la délivrance du brevet: **29.07.2015**
(21) Numéro de dépôt: 13186022.3
(22) Date de dépôt: 25.09.2013
(51) Int. Cl.: G01F 1/07, G01F 1/075

(54) **Compteur de fluide de vitesse à turbine avec palier de centrage**
Turbinen-Fluiddurchflussmesser mit Zentrierlager
Fluid turbine flow meter with centering bearing

(30) Priorité: 09.10.2012 FR 1259619
(43) Date de publication de la demande: 16.04.2014
(73) Titulaire: Diehl Metering S.A.S., 68300 Saint-Louis (FR)
(72) Inventeur: Denner, Bruno, 68400 Riedisheim (FR)
(74) Mandataire: Novagraaf Technologies

(56) Documents cités:
- EP-A1- 0 607 089
- EP-A2- 0 100 393
- DE-A1-102006 002 519
- CHEN J S J: "On the design of a wide range mini-flow paddlewheel flow sensor", SENSORS AND ACTUATORS A, ELSEVIER SEQUOIA S.A., LAUSANNE, CH, vol. 87, no. 1-2, 1 décembre 2000 (2000-12-01), pages 1-10, XP004224559, ISSN: 0924-4247, DOI: 10.1016/S0924-4247(00)00457-X

## Description

La présente invention concerne le domaine des compteurs de fluide de vitesse à turbine, notamment les compteurs de liquide à turbine destinés à mesurer la consommation d'eau.

Plus particulièrement, l'invention est particulièrement adaptée à un compteur de fluide de vitesse à turbine à jet unique ou à un compteur de fluide de vitesse à turbine à jets multiples.

Un compteur de fluide de vitesse à turbine présente un boîtier comprenant une chambre de mesure dans laquelle débouche une tubulure d'entrée et une tubulure de sortie, une turbine présentant des pâles et entraînée en rotation dans la chambre de mesure sous l'effet de l'écoulement de fluide entrant par la tubulure d'entrée et agissant sur les pâles.

Le compteur de fluide de vitesse à turbine présente également un boîtier contenant un totaliseur pour compter le nombre de tours de la turbine à laquelle ce dernier est accouplé dans le cas d'un totalisateur sec par une transmission magnétique, et dans le cas d'un totaliseur noyé par une transmission mécanique, et un couvercle transparent recouvrant le totalisateur.

L'axe de rotation de la turbine se déplace verticalement entre deux butées axiales lorsque le débit de fluide dépasse une valeur seuil. L'axe de rotation de la turbine pivote sur une première butée axiale pour des débits inférieurs à la valeur seuil et sur une deuxième butée axiale pour des débits supérieurs à la valeur seuil, ce qui permet de réduire l'usure des butées axiales et ainsi améliorer les performances du compteur au cours de sa vie.

Cependant, l'utilisation de ces deux butées axiales ne permet pas de réduire les frottements sur le palier de centrage de l'axe de rotation dans la chambre de mesure.

Il existe un besoin de trouver une solution technique permettant de diminuer les frottements de l'axe de rotation de la turbine sur le palier de centrage, en particulier lorsque la turbine tourne à grande vitesse, tout en assurant le maintien par les butées axiales.

Dans ce contexte, la présente invention a pour but de proposer un compteur de fluide de vitesse à turbine exempt de la limitation précédemment évoquée.

Le compteur de fluide de vitesse à turbine, comprend une chambre de mesure, un corps de turbine se déplaçant axialement, en fonction des débits de fluide, entre une position haute et une position basse dans la chambre de mesure et présentant un axe de rotation, un palier de centrage de l'axe de rotation dans la chambre de mesure présentant un corps longitudinal ayant un passage longitudinal supportant et traversé par l'axe de rotation, l'axe de rotation pivotant en étant maintenu axialement dans la chambre de mesure, par une première butée axiale dans la position haute et par une deuxième butée axiale dans la position basse.

Conformément à l'invention, le compteur de fluide de vitesse à turbine est remarquable en ce que le palier de centrage présente, dans le passage longitudinal, au moins deux parois cylindriques de centrages d'appui longitudinal de l'axe de rotation, l'axe de rotation étant agencé de façon à venir en contact, dans le palier de centrage, sur une paroi cylindrique de centrage d'appui longitudinal dans la position haute, et sur une autre paroi cylindrique de centrage d'appui longitudinal, de section transversale différente, dans la position basse.

Dans le mode de réalisation préféré de l'invention, le palier de centrage présente, dans le passage longitudinal, deux parois cylindriques de centrage d'appui longitudinal de l'axe de rotation en position basse.

Le palier de centrage présente, dans le passage longitudinal, deux parois cylindriques d'extrémités de centrage d'appui de l'axe de rotation en position basse, situées à une extrémité supérieure et à une extrémité inférieure du palier de centrage, et une paroi centrale de centrage d'appui longitudinal de l'axe de rotation en position haute, située suivant une longueur du palier comprise entre les deux parois cylindriques d'extrémité du palier de centrage.

Avantageusement, l'axe de rotation présente une forme de stylo avec une première paroi principale, une deuxième paroi supérieure et une troisième paroi inférieure dont les sections transversales cylindriques sont agencées pour venir en appui longitudinal respectivement sur la paroi cylindrique centrale en position haute, et sur la paroi cylindrique d'extrémité supérieure et sur la paroi cylindrique d'extrémité inférieure en position basse.

La paroi cylindrique d'extrémité supérieure de centrage d'appui présente une section transversale plus grande que la section transversale de la paroi cylindrique centrale, et la paroi cylindrique d'extrémité inférieure de centrage d'appui présente une section transversale plus petite que la section transversale de la paroi cylindrique centrale.

Le palier de centrage comporte des surfaces de contact tronconiques de guidage de l'axe de rotation et en ce que l'axe de rotation présente des surfaces de contact tronconiques de guidage complémentaires des surfaces de contact tronconiques de guidage du palier de centrage.

Le corps de turbine présente des pales, un manchon situé et fixé à l'intérieur du corps de turbine, l'axe de rotation étant monté fixé à l'intérieur du manchon, le manchon venant en appui longitudinal par une surface extérieure haute sur la première butée axiale supérieure, en position haute.

Avantageusement, le palier de centrage présente une surface extérieure légèrement tronconique convergente vers sa partie inférieure, plusieurs anses permettant le support du palier de centrage sur des parois verticales de la chambre de mesure ayant à leur extrémité une forme de doigt.

Le palier de centrage présente plusieurs pattes d'extrémité inférieure destinées à venir en appui longitudinal sur la deuxième butée axiale inférieure en position basse.

Les pattes d'extrémité inférieure comportent sur leurs parois intérieures un épaulement faisant butée sur la deuxième butée axiale inférieure.

L'axe de rotation est surmoulé dans le manchon et présente une collerette en appui longitudinal sur une paroi intérieure du manchon.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue légèrement en perspective de l'intérieur d'un compteur de fluide de vitesse à turbine de l'état de l'art ;
- la figure 2 représente une vue en coupe d'un palier de centrage, selon l'invention, d'un axe de rotation de la turbine situé en position basse dans une chambre de mesure ;
- la figure 3 représente une vue en coupe du palier de centrage selon l'invention, de l'axe de rotation situé en position haute ;
- la figure 4 représente une vue extérieure légèrement en perspective du palier de centrage selon l'invention ;
- la figure 5 représente une vue en coupe longitudinale du palier de centrage selon l'invention ; et
- la figure 6 représente une vue latérale de l'axe de rotation de la turbine selon l'invention, conformé pour se déplacer dans le palier de centrage.

Le mot 'fluide' par la suite de la description se réfère à de l'eau ou à tout liquide ou gaz utilisable avec le compteur de fluide de vitesse à turbine ci-après décrit.

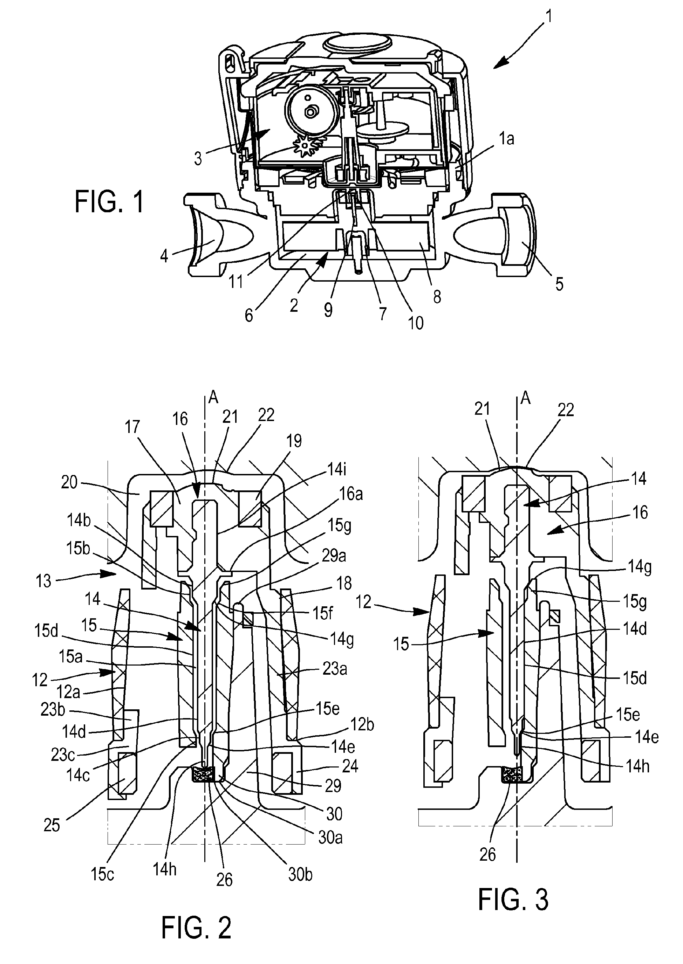

En référence à la figure 1, il est illustré un compteur de fluide de vitesse 1 à turbine à jet unique de l'état de la technique qui présente une partie hydraulique 2 dans laquelle circule le liquide, et un totaliseur 3 où sont affichées les données liées au comptage.

Plus précisément, il présente un boîtier 1a du compteur de fluide, par exemple en bronze ou laiton, de forme générale cylindrique à section circulaire, ayant une tubulure 4 d'entrée de fluide et une tubulure 5 de sortie de fluide, de part et d'autre d'une chambre de mesure 6 du volume de fluide circulant dans la tubulure d'entrée 4 et la tubulure de sortie 5.

La chambre de mesure 6 présente une forme cylindrique coaxiale au boîtier 1a.

Le boitier 1a comporte le totalisateur 3 en partie supérieure cylindrique coaxiale à la chambre de mesure 6, mais de diamètre plus grand.

Dans le fond du boîtier 1a et au centre de la chambre de mesure 6, est montée une crapaudine 7 autour de laquelle pivote la partie mobile 8 du compteur.

La partie mobile du compteur comporte un corps de turbine 8 qui constitue l'élément moteur du compteur de fluide 1 et qui est solidaire d'un axe vertical 9, la turbine 8 présentant des pales entraînées en rotation dans la chambre de mesure 6 sous l'effet du jet de fluide provenant de la tubulure d'entrée 4 et dirigé sur une pale.

L'axe vertical 9 est en appui longitudinal sur un palier de centrage 10 et en fonction de la valeur des débits de fluide dans la chambre de mesure 6 sur une butée axiale supérieure 11.

Une transmission, ici magnétique, permet d'accoupler la turbine et le totaliseur 3.

Des mécanismes d'engrenages connus de l'état de l'art et reliés à la transmission permettent de compter dans le totaliseur 3, le nombre de tours effectués par la turbine 8.

Le nombre de tours effectués par la turbine 8 est affiché par un index qui peut- être mécanique ou électronique.

Une bague de scellement permet de fixer le totaliseur 3 sur le boîtier 1a de la chambre de mesure 6.

Le dispositif de palier de centrage selon l'invention remplace la crapaudine 7, le palier de centrage 10 et la butée axiale supérieure 11 du compteur de l'état de la technique.

De plus, il s'applique à tout compteur de fluide de vitesse à turbine à jet unique ou à tout compteur de fluide de vitesse à turbine à jets multiples.

Pour toute la suite de la description et dans un souci de simplification, il est fait référence à l'axe longitudinal A de la chambre de mesure. Le terme 'transversal' désigne toute dimension s'étendant dans un plan perpendiculaire à l'axe longitudinal A et les termes 'supérieure' et 'inférieure', 'haute' et 'basse' décrivent la position respective des éléments décrits les uns par rapport aux autres, situés le long de l'axe longitudinal A.

Comme illustré sur les figures 2 et 3, la partie mobile selon l'invention du compteur de fluide de vitesse à turbine, comporte un corps longitudinal de turbine 12 situé dans une chambre de mesure 13 et présentant un axe de rotation 14 pivotant dans et en appui sur un palier de centrage 15.

Le palier de centrage 15 présente un corps longitudinal traversé par l'axe de rotation 14 dans un passage longitudinal 15a du palier supportant l'axe de rotation 14.

Le corps de turbine 12 présente une partie principale longitudinale 12a sensiblement cylindrique et des pales qui sont reliées à la partie principale 12a mais qui ne sont pas représentées ici sur les figures.

Sur les figures 2 et 3, le palier de centrage 15 présente une longueur sensiblement égale à celle de la partie principale 12a du corps de turbine 12.

L'axe de rotation 14 est fixé dans un manchon 16.

Le manchon 16 comporte une tête supérieure 17 cylindrique et une embase inférieure 18 insérée et fixée en appui dans le corps de turbine 12.

La tête supérieure 17 du manchon 16 présente un aimant 19 de forme annulaire qui permet de réaliser la transmission magnétique avec un autre aimant non représenté et situé dans le totaliseur en regard de l'aimant 19, ce qui entraîne le déplacement des mécanismes d'engrenage.

La tête supérieure 17 est située dans une cavité supérieure 20 de la chambre de mesure 13 au dessus de la partie principale de la chambre de mesure 13 dans laquelle se situe le palier de centrage 15 et débouchent la tubulure d'entrée et la tubulure de sortie.

La tête supérieure 17 présente un bosselage 21 venant en appui axial, en position haute, sur une première butée axiale 22 supérieure qui est ici une paroi supérieure de la cavité supérieure 20 de la chambre de mesure 13.

L'embase inférieure 18 creuse du manchon 16 présente trois parois verticales supérieures 23a, dont une seule est représentée, et qui sont reliées toutes les trois à une paroi cylindrique verticale inférieure 23b elle-même reliée par une paroi horizontale 23c à une paroi cylindrique verticale inférieure 24.

Cette paroi cylindrique verticale inférieure 24 est en appui par un épaulement cylindrique sur un bord inférieur 12b du corps principal 12a de turbine 12, et présente une masselotte 25 pour équilibrer la rotation du corps de turbine 12.

Conformément à l'invention, le passage longitudinal 15a présente différentes parois cylindriques de centrages d'appui longitudinal de l'axe de rotation 14 en fonction de la valeur du débit de fluide.

L'axe de rotation 14 est maintenu axialement par la première butée axiale 22 de la partie supérieure de la chambre de mesure 13 dans une position haute.

L'axe de rotation 14 est en appui axial sur une deuxième butée axiale 26 dans une position basse, cette deuxième butée axiale 26 étant en appui sur la partie inférieure de la chambre de mesure 13.

Il est en appui longitudinal, dans le palier de centrage 15, sur deux parois cylindriques 15b, 15c d'extrémités de centrage en position basse et sur une paroi cylindrique 15d centrale de centrage en position haute et se déplace entre la position basse et la position haute lorsque le débit de fluide entrant dans la tubulure d'admission atteint un débit seuil.

Plus précisément, les parois cylindriques 15b, 15c d'extrémités sont situées à l'extrémité supérieure et à l'extrémité inférieure du palier de centrage 15, et la paroi cylindrique 15d centrale est située suivant une longueur du palier de centrage 15 entre ces deux parois cylindriques 15b, 15c d'extrémités.

Sur les figures 2 et 3, à titre illustratif mais non limitatif, la paroi cylindrique 15d centrale de centrage d'appui présente une longueur d'appui plus grande que celles des parois cylindriques 15b, 15c d'extrémités de centrages d'appui.

Par exemple, à titre non limitatif, la longueur de la paroi peut être deux à vingt fois plus grande que les longueurs des parois cylindriques 15b, 15c d'extrémités.

Dans une variante de réalisation non représentée, le passage longitudinal 15a comporte une seule paroi cylindrique de centrage d'appui selon une position basse pour les premiers débits inférieurs au débit seuil et une seule paroi cylindrique de centrage d'appui selon une position haute pour les deuxièmes débits supérieurs au débit seuil et de section transversale différente.

En référence aux figures 2, 3 et 5, la paroi cylindrique centrale 15d de centrage d'appui longitudinal comporte une section transversale plus petite que celle de la paroi cylindrique 15b d'extrémité supérieure de centrage d'appui longitudinal, et plus grande que celle de la paroi cylindrique 15c d'extrémité inférieure de centrage d'appui longitudinal.

La paroi cylindrique centrale 15d du palier de centrage 15 est reliée à la paroi cylindrique d'extrémité supérieure 15b, respectivement à la paroi cylindrique d'extrémité inférieure 15c, par une première surface tronconique 15e, respectivement une deuxième surface tronconique 15f.

La paroi cylindrique d'extrémité supérieure du palier de centrage 15 présente une troisième surface tronconique 15g.

La première surface tronconique 15e et la troisième surface tronconique 15g sont des surfaces de contact permettent le guidage et l'appui de l'axe de rotation 14 qui se déplace et s'appuie dans le palier de centrage 15.

La deuxième surface tronconique 15f permet le dégagement de l'axe de rotation 14 par rapport au palier de centrage 15.

Le palier de centrage 15 présente une surface extérieure 27 légèrement tronconique convergente vers sa partie inférieure, plusieurs anses 28 permettant le support du palier de centrage 15 sur des parois verticales 29 de la chambre de mesure 13 ayant à leur extrémité supérieure une forme de doigt 29a en saillie dans lequel vient se loger l'anse 28 pour fixer le palier de centrage 15 à la chambre de mesure 13.

A titre d'exemple, le palier de centrage 15 présente trois anses 28 dont deux seulement sont ici représentées.

Le palier de centrage 15 présente plusieurs pattes 30 d'extrémité inférieure 30a destinées à venir en appui axial sur la partie inférieure de la chambre de mesure 13 et sur la deuxième butée axiale 26 inférieure par un épaulement rectiligne 30b.

La deuxième butée axiale 26 peut comporter une surface anti-abrasive.

A titre d'exemple, le palier de centrage 15 présente trois pattes 30 d'extrémité inférieure 30a dont deux seulement sont représentées ici.

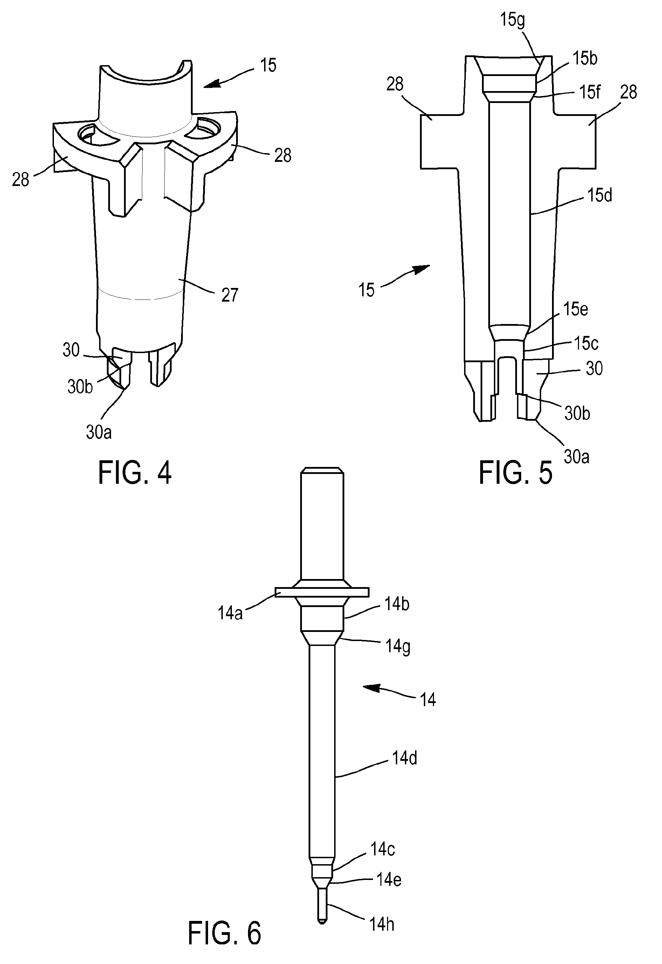

Comme illustré sur la figure 6, l'axe de rotation 14 présente une forme de stylo avec une première paroi cylindrique principale 14d, une deuxième paroi cylindrique supérieure 14b et une troisième paroi cylindrique inférieure 14c ayant une partie d'extrémité en forme de pointe 14h, dont les sections transversales sont agencées pour venir en appui longitudinal sur la paroi cylindrique d'extrémité supérieure 15b et sur la paroi cylindrique d'extrémité inférieure 15c pour les premiers débits, et sur la paroi cylindrique centrale 15d pour les deuxièmes débits.

L'axe de rotation 14 présente des surfaces de contact tronconiques 14e, 14g de guidage et d'appui complémentaires des surfaces de contact tronconiques 15e, 15g de guidage et d'appui du palier de centrage 15.

L'axe de rotation 14 présente une collerette 14a en appui axial sur une paroi intérieure 16a du manchon 16 et peut être surmoulé dans une partie cylindrique supérieure 14i du manchon 16.

Le fonctionnement du palier de centrage 15 selon l'invention est le suivant.

Pour les débits inférieurs au débit seuil, l'axe de rotation 14 est appui axial sur la deuxième butée axiale 26, par sa pointe 14h.

L'axe de rotation 14 est en appui longitudinal par sa deuxième paroi cylindrique supérieure 14b sur la paroi cylindrique 15b d'extrémité supérieure de centrage d'appui du palier 15 et par sa troisième paroi cylindrique inférieure 14c sur la paroi cylindrique 15c d'extrémité inférieure de centrage d'appui du palier 15, en position basse.

Lorsque le débit augmente et dépasse une valeur seuil de débit, l'axe de rotation 14 se déplace le long de l'axe longitudinal A dans le palier de centrage 15, et en l'occurrence dans l'exemple illustré, vers le haut pour venir en appui longitudinal par sa première paroi cylindrique principale 14d sur le côté droit de la paroi cylindrique centrale 15d de centrage d'appui du palier 15, la force de l'écoulement de fluide le plaquant sur ce côté, en position haute, comme illustré sur la figure 3.

Le déplacement de l'axe de rotation 14 est assuré par le guidage des premières et troisièmes surfaces tronconiques 15e, 15g.

De plus, ces premières et troisièmes surfaces tronconiques 15e, 15g permettent également l'appui longitudinal des deux surfaces tronconiques 14e, 14g en regard de l'axe de rotation 14 en position haute.

## Revendications

1. Compteur de fluide de vitesse à turbine, comprenant une chambre de mesure (13), un corps de turbine (12) se déplaçant axialement dans la chambre de mesure (13), en fonction des débits de fluide, entre une position haute et une position basse et présentant un axe de rotation (14), un palier de centrage (15) de l'axe de rotation (14) dans la chambre de mesure (13) présentant un corps longitudinal ayant un passage longitudinal (15a) supportant et traversé par l'axe de rotation (14), l'axe de rotation (14) pivotant en étant maintenu axialement dans la chambre de mesure (13), par une première butée axiale (22) dans la position haute et par une deuxième butée axiale (26) dans la position basse,
**caractérisé en ce que** le palier de centrage (15) présente, dans le passage longitudinal (15a), au moins deux parois cylindriques de centrages d'appui longitudinal de l'axe de rotation (14), l'axe de rotation (14) étant agencé de façon à venir en contact, dans le palier de centrage (15), sur une paroi cylindrique de centrage d'appui longitudinal (15d) dans la position haute, et sur une autre paroi cylindrique de centrage d'appui longitudinal (15b, 15c), de section transversale différente, dans la position basse.

2. Compteur de fluide de vitesse à turbine selon la revendication 1, **caractérisé en ce que** le palier de centrage (15) présente, dans le passage longitudinal (15a), deux parois cylindriques de centrage d'appui longitudinal (15b, 15c) de l'axe de rotation (14) en position basse.

3. Compteur de fluide de vitesse à turbine selon la revendication 2, **caractérisé en ce que** le palier de centrage (15) présente, dans le passage longitudinal (15a), deux parois cylindriques d'extrémités (15b, 15c) de centrage d'appui de l'axe de rotation (14) en position basse, situées à une extrémité supérieure et à une extrémité inférieure du palier de centrage (15), et une paroi cylindrique centrale (15d) de centrage d'appui longitudinal de l'axe de rotation (14) en position haute, située suivant une longueur du palier comprise entre les deux parois cylindriques d'extrémité (15b, 15c).

4. Compteur de fluide de vitesse à turbine selon la revendication 3, **caractérisé en ce que** l'axe de rotation (14) présente une forme de stylo avec une première paroi cylindrique principale (14d), une deuxième paroi cylindrique supérieure (14b) et une troisième paroi cylindrique inférieure (14c) dont les sections transversales sont agencées pour venir en appui longitudinal respectivement sur la paroi cylindrique centrale (15d) en position haute, et sur la paroi cylindrique (15b) d'extrémité supérieure et sur la paroi cylindrique (15c) d'extrémité inférieure en position basse.

5. Compteur de fluide de vitesse à turbine selon la revendication 4, **caractérisé en ce que** la paroi cylindrique (15b) d'extrémité supérieure de centrage d'appui présente une section transversale plus grande que la section transversale de la paroi cylindrique centrale (15d), et la paroi cylindrique (15c) d'extrémité inférieure de centrage d'appui présente une section transversale plus petite que la section transversale de la paroi cylindrique centrale (15d).

6. Compteur de fluide de vitesse à turbine selon l'une des revendications 4 ou 5, **caractérisé en ce que** le palier de centrage (15) comporte des surfaces de contact tronconiques (15e, 15f, 15g) de guidage de l'axe de rotation (14) et **en ce que** l'axe de rotation (14) présente des surfaces de contact tronconiques (14e, 14g) de guidage complémentaires des surfaces de contact tronconiques (15e, 15g) de guidage du palier de centrage (15).

7. Compteur de fluide de vitesse à turbine selon l'une des revendications 1 à 6, **caractérisé en ce que** le palier de centrage (15) présente une surface extérieure légèrement tronconique convergente vers sa partie inférieure, plusieurs anses (28) permettant le support du palier de centrage (15) sur des parois verticales de la chambre de mesure (13) ayant à leur extrémité une forme de doigt.

8. Compteur de fluide de vitesse à turbine selon l'une des revendications 1 à 7, **caractérisé en ce que** le palier de centrage (15) présente plusieurs pattes (30) d'extrémité inférieure destinées à venir en appui longitudinal sur la deuxième butée axiale (26) inférieure en position basse.

9. Compteur de fluide de vitesse à turbine selon la revendication 8, **caractérisé en ce que** les pattes (30) d'extrémité inférieure comportent sur leurs parois intérieures un épaulement (30b) faisant butée sur la deuxième butée axiale (26) inférieure.

10. Compteur de fluide de vitesse à turbine selon l'une des revendications 1 à 9, **caractérisé en ce que** l'axe de rotation (14) est surmoulé dans un manchon (16) et présente une collerette (14a) en appui longitudinal sur une paroi intérieure (16a) du manchon (16).

## Patentansprüche

1. Geschwindigkeitsflüssigkeitszähler mit Turbine, umfassend eine Messkammer (13), einen Turbinenkörper (12), der sich axial in der Messkammer (13) in Abhängigkeit von den Flüssigkeitsdurchsätzen zwischen einer Hochstellung und einer Tiefstellung bewegt und eine Rotationsachse (14) aufweist, ein Zentrierlager (15) der Rotationsachse (14) in der Messkammer (13) aufweist, die einen Längskörper aufweist, der eine Längspassage (15a) hat, die die Rotationsachse (14) trägt und von ihr durchquert wird, wobei die Rotationsachse (14) schwenkt, indem sie axial in der Messkammer (13) durch einen ersten axialen Anschlag (22) in der Hochstellung und durch einen zweiten axialen Anschlag (26) in der Tiefstellung gehalten wird,
**dadurch gekennzeichnet, dass** das Zentrierlager (15) in der Längspassage (15a) mindestens zwei zylindrische Zentrierwände mit Längsauflage der Rotationsachse (14) aufweist, wobei die Rotationsachse (14) derart eingerichtet ist, dass sie in dem Zentrierlager (15) auf einer zylindrischen Zentrierwand mit Längsauflage (15d) in der Hochstellung und auf einer anderen zylindrischen Zentrierwand mit Längsauflage (15b, 15c) mit unterschiedlichem Längsquerschnitt in der Tiefstellung in Berührung kommt.

2. Geschwindigkeitsflüssigkeitszähler mit Turbine nach Anspruch 1, **dadurch gekennzeichnet, dass** das Zentrierlager (15) in der Längspassage (15a) zwei zylindrische Zentrierwände mit Längsauflage (15b, 15c) der Rotationsachse (14) in Tiefstellung aufweist.

3. Geschwindigkeitsflüssigkeitszähler mit Turbine nach Anspruch 2, **dadurch gekennzeichnet, dass** das Zentrierlager (15) in der Längspassage (15a) zwei zylindrische Zentrierendwände (15b, 15c) zur Auflage der Rotationsachse (14) in Tiefstellung aufweist, die an einem oberen Ende und an einem unteren Ende des Zentrierlagers (15) liegen, und eine zentrale zylindrische Zentrierwand (15d) zur Längsauflage der Rotationsachse (14) in Hochstellung, die entlang einer Länge des Lagers zwischen den zwei zylindrischen Endwänden (15b, 15c) liegt.

4. Geschwindigkeitsflüssigkeitszähler mit Turbine nach Anspruch 3, **dadurch gekennzeichnet, dass** die Rotationsachse (14) eine Stiftform mit einer ersten zylindrischen Hauptwand (14d), einer zweiten zylindrischen oberen Wand (14b) und einer dritten zylindrischen unteren Wand (14c) aufweist, deren Querschnitte eingerichtet sind, um zur Längsauflage jeweils auf der zentralen zylindrischen Wand (15d) in Hochstellung und auf der oberen zylindrischen Endwand (15b) und auf der unteren zylindrischen Endwand (15c) in Tiefstellung zu kommen.

5. Geschwindigkeitsflüssigkeitszähler mit Turbine nach Anspruch 4, **dadurch gekennzeichnet, dass** die obere zylindrische Endwand (15b) zur Auflagezentrierung einen größeren Querschnitt aufweist als der Querschnitt der zentralen zylindrischen Wand (15d), und die untere zylindrische Endwand (15c) zur Auflagezentrierung einen Querschnitt aufweist, der kleiner ist als der Querschnitt der zentralen zylindrischen Wand (15d).

6. Geschwindigkeitsflüssigkeitszähler mit Turbine nach einem der Ansprüche 4 oder 5, **dadurch gekennzeichnet, dass** das Zentrierlager (15) kegelstumpfförmige Führungskontaktoberflächen (15e, 15f, 15g) der Rotationsachse (14) aufweist, und dass die Rotationsachse (14) kegelstumpfförmige Führungskontaktoberflächen (14e, 14g) aufweist, die zu den kegelstumpfförmigen Führungskontaktoberflächen (15e, 15g) des Zentrierlagers (15) komplementär sind.

7. Geschwindigkeitsflüssigkeitszähler mit Turbine nach einem der Ansprüche 1 bis 6, **dadurch gekennzeichnet, dass** das Zentrierlager (15) eine äußere leicht kegelstumpfförmige Oberfläche aufweist, die zu ihrem unteren Teil konvergiert, wobei mehrere Bügel (28) das Tragen des Zentrierlagers (15) auf vertikalen Wänden der Messkammer (13), die an ihrem Ende eine Fingerform haben, erlauben.

8. Geschwindigkeitsflüssigkeitszähler mit Turbine nach einem der Ansprüche 1 bis 7, **dadurch gekennzeichnet, dass** das Zentrierlager (15) mehrere Pratzen (30) des unteren Endes aufweist, die dazu bestimmt sind, auf dem zweiten axialen unteren Anschlag (26) in Tiefstellung zur Längsauflage zu kommen.

9. Geschwindigkeitsflüssigkeitszähler mit Turbine nach Anspruch 8, **dadurch gekennzeichnet, dass** die Pratzen (30) des unteren Endes auf ihren Innenwänden einen Ansatz (30b) aufweisen, der einen Anschlag auf dem zweiten axialen unteren Anschlag (26) bildet.

10. Geschwindigkeitsflüssigkeitszähler mit Turbine nach einem der Ansprüche 1 bis 9, **dadurch gekennzeichnet, dass** die Rotationsachse (14) in einer Hülse (16) aufgeformt ist und einen Kragen (14a) in Längsauflage auf einer inneren Wand (16a) der Hülse (16) aufweist.

## Claims

1. Turbine fluid/speed meter, comprising a measurement chamber (13), a turbine body (12) that is displaced axially in the measurement chamber (13) as a function of the fluid flow rates, between a high position and a low position and having a rotation axis (14), a centering bearing (15) for the rotation axis (14) in the measurement chamber (13) that has a longitudinal body with a longitudinal passage (15a) supporting and passed through by the rotation axis (14), the rotation axis (14) pivoting by being held axially in the measurement chamber (13), by a first axial end stop (22) in the high position and by a second axial end stop (26) in the low position,
**characterized in that** the centering bearing (15) has, in the longitudinal passage (15a), at least two cylindrical longitudinal support centering walls for the rotation axis (14), the rotation axis (14) being arranged so as to come into contact, in the centering bearing (15), on a cylindrical longitudinal support centering wall (15d) in the high position, and on another cylindrical longitudinal support centering wall (15b, 15c), of different cross section, in the low position.

2. Turbine fluid/speed meter according to Claim 1, **characterized in that** the centering bearing (15) has, in the longitudinal passage (15a), two cylindrical longitudinal support centering walls (15b, 15c) for the rotation axis (14) in the low position.

3. Turbine fluid/speed meter according to Claim 2, **characterized in that** the centering bearing (15) has, in the longitudinal passage (15a), two end cylindrical support centering walls (15b, 15c) for the rotation axis (14) in the low position, situated at a top end and at a bottom end of the centering bearing (15), and a central cylindrical longitudinal support centering wall (15d) for the rotation axis (14) in the high position, situated according to a length of the bearing between the two end cylindrical walls (15b, 15c).

4. Turbine fluid/speed meter according to Claim 3, **characterized in that** the rotation axis (14) has the form of a pen with a first main cylindrical wall (14d), a second top cylindrical wall (14b) and a third bottom cylindrical wall (14c), the cross sections of which are arranged to bear longitudinally respectively on the central cylindrical wall (15d) in the high position, and on the top end cylindrical wall (15b) and on the bottom end cylindrical wall (15c) in the low position.

5. Turbine fluid/speed meter according to Claim 4, **characterized in that** the top end cylindrical support centering wall (15b) has a cross section greater than the cross section of the central cylindrical wall (15d), and the bottom end cylindrical support centering wall (15c) has a cross section smaller than the cross section of the central cylindrical wall (15d).

6. Turbine fluid/speed meter according to either of Claims 4 and 5, **characterized in that** the centering bearing (15) comprises tapered contact surfaces (15e, 15f, 15g) for guiding the rotation axis (14) and **in that** the rotation axis (14) has tapered guiding contact surfaces (14e, 14g) complementary to the tapered guiding contact surfaces (15e, 15g) of the centering bearing (15).

7. Turbine fluid/speed meter according to one of Claims 1 to 6, **characterized in that** the centering bearing (15) has an outer surface that is slightly tapered converging toward its bottom part, a number of arched handles (28) making it possible to support the centering bearing (15) on vertical walls of the measurement chamber (13) that have a finger shape at their end.

8. Turbine fluid/speed meter according to one of Claims 1 to 7, **characterized in that** the centering bearing (15) has several bottom end tabs (30) intended to bear longitudinally on the second bottom axial stop (26) in the low position.

9. Turbine fluid/speed meter according to Claim 8, **characterized in that** the bottom end tabs (30) comprise, on their inner walls, a shoulder (30b) abutting on the second bottom axial stop (26).

10. Turbine fluid/speed meter according to one of Claims 1 to 9, **characterized in that** the rotation axis (14) is overmolded in a sleeve (16) and has a collar (14a) bearing longitudinally on an inner wall (16a) of the sleeve (16).
